# EUROPÄISCHE PATENTSCHRIFT

(11) **EP 1 794 479 B1**
(45) Veröffentlichungstag und Bekanntmachung des Hinweises auf die Patenterteilung: **22.04.2009**
(21) Anmeldenummer: 05788981.8
(22) Anmeldetag: 16.09.2005
(51) Int. Cl.: F16H 61/04

(54) **SENSORANORDNUNG UND VERFAHREN ZUR STEUERUNG EINES AUTOMATISIERTEN DOPPELKUPPLUNGSGETRIEBES**
SENSOR ARRAY AND METHOD FOR CONTROLLING AUTOMATIC TWIN-CLUTCH TRANSMISSION
DISPOSITIF DETECTEUR ET PROCEDE DE COMMANDE D'UNE BOITE DE VITESSES A DOUBLE EMBRAYAGE AUTOMATISEE

(30) Priorität: 24.09.2004 DE 102004046558
(43) Veröffentlichungstag der Anmeldung: 13.06.2007
(73) Patentinhaber: Volkswagen Aktiengesellschaft, 38436 Wolfsburg (DE); GETRAG Getriebe- und Zahnradfabrik Hermann Hagenmeyer GmbH & Cie KG, 74199 Untergruppenbach (DE)
(72) Erfinder: FÄHLAND, Jörg, 38524 Sassenburg (DE); CAPPELMANN, Bernd, 38176 Wendeburg (DE); HOFMANN, Rainer, 38350 Helmstedt (DE); DAMM, Ansgar, 38518 Gifhorn (DE); RÜHLE, Günter, 74369 Löchgau (DE); SEUFERT, Martin, 71711 Steinheim (DE); BECK, Matthias, 74074 Heilbronn (DE); GLATTHAAR, Josef, 78727 Oberndorf (DE); HERDLE, Lothar, 74629 Pfedelbach (DE)
(86) Internationale Anmeldenummer: PCT/EP2005/010031
(87) Internationale Veröffentlichungsnummer: WO 2006/032418

(56) Entgegenhaltungen:
- EP-A- 1 382 479
- DE-A1- 3 620 884
- DE-A1- 10 308 218
- DE-C1- 19 939 819
- US-A1- 2004 112 171

## Beschreibung

Die Erfindung betrifft eine Sensoranordnung zur Steuerung eines automatisierten Doppelkupplungsgetriebes, das zwei Teilgetriebe mit jeweils einer motorseitig über eine Antriebswelle mit einem Antriebsmotor verbundenen Motorkupplung, einer getriebeseitig mit der Motorkupplung verbundenen Eingangswelle, und einer Gruppe von Gangstufen bildenden Zahnradsätzen mit jeweils einem Festrad und einem Losrad umfasst, wobei mittels der Gangstufen jeweils durch das Einrücken einer dem Losrad zugeordnete Gangkupplung eine übersetzte Verbindung der Eingangswelle mit einer Ausgangswelle herstellbar ist, die eine mit einem Achsantrieb in Verbindung stehende Abtriebswelle bildet oder mit einer solchen Abtriebswelle dauerhaft in Verbindung steht, mit mindestens einer an der Antriebswelle angeordneten antriebsseitigen Drehzahlsensoreinheit, einer an der ersten Eingangswelle des ersten Teilgetriebes angeordneten ersten eingangsseitigen Drehzahlsensoreinheit, und einer an der zweiten Eingangswelle-des zweiten Teilgetriebes angeordneten zweiten eingangsseitigen Drehzahlsensoreinheit, die jeweils ein mit der betreffenden Welle drehfest verbundenes Geberrad und einen im Wirkbereich des Geberrades gehäusefest angeordneten Impulssensor aufweisen.

Des Weiteren betrifft die Erfindung ein Verfahren zur Steuerung eines derartigen automatisierten Doppelkupplungsgetriebes.

Das Doppelkupplungsgetriebe ist als Getriebekonzept schon seit längerem bekannt, beispielsweise aus der DE 35 46 454 A1, aber praktisch erst seit kurzem in Form eines automatisierten Doppelkupplungsgetriebes in einigen Serien-Pkws verfügbar. Das Doppelkupplungsgetriebe umfasst ein erstes Teilgetriebe mit einer ersten Eingangswelle, der eine erste Motorkupplung und zumeist mehrere, jeweils eine Gangstufe bildende Zahnradsätze zugeordnet sind, und ein zweites. Teilgetriebe mit einer zweiten Eingangswelle, der eine zweite Motorkupplung und mehrere, jeweils weitere Gangstufen bildende Zahnradsätze zugeordnet sind. Ausgangsseitig kann das Doppelkupplungsgetriebe eine gemeinsame Ausgangswelle aufweisen, die mit den Zahnradsätzen beider Teilgetriebe in Verbindung steht bzw. verbindbar ist und in diesem Fall eine mit dem Achsantrieb einer angetriebenen Fahrzeugachse in Verbindung stehende Abtriebswelle bildet. Zur Erzielung.einer möglichst kurzen Baulänge, die insbesondere für einen Quereinbau der aus dem Antriebsmotor und dem Doppelkupplungsgetriebe bestehenden Antriebseinheit von Bedeutung ist, kann aber auch jedes Teilgetriebe des Doppelkupplungsgetriebes eine eigene Ausgangswelle aufweisen, die V-förmig um die zumeist koaxial zueinander angeordneten Eingangswellen angeordnet sind und über eine Abtriebsverzahnung mit einer gemeinsamen Abtriebswelle in Verbindung stehen. In einem derartigen Doppelkupplungsgetriebe besteht ein Schaltvorgang zwischen zwei Gangstufen, d.h. zwischen einer eingelegten Lastgangstufe und einer einzulegenden Zielgangstufe, die unterschiedlichen Teilgetrieben zugeordnet sind, zunächst in einem Einlegen der Zielgangstufe, was in der Regel über eine einem Losrad der betreffenden Gangstufe zugeordnete und über eine Schaltmuffe betätigbare Gangkupplung erfolgt, und in einem anschließenden zeitlich überschnittenen Trennen der der Eingangswelle der Lastgangstufe zugeordneten Motorkupplung und Schließen der der Eingangswelle der Zielgangstufe zugeordneten Motorkupplung. Die Kraftübertragung erfolgt somit jeweils abwechselnd über die erste und die zweite Eingangswelle und wird während des Schaltvorgangs nicht unterbrochen, weshalb das Doppelkupptungsgetriebe auch zur Gattung der Lastschaltgetriebe gezählt wird. Um möglichst viele Schaltvorgänge in der beschriebenen Weise durchführen zu können, wird zumeist eine wechselweise Zuordnung der Gangstufen zu den beiden Teilgetrieben gewählt, d.h. das eine Teilgetriebe weist die ungeraden Vorwärts-Gangstufen und das andere Teilgetriebe die geraden Vorwärts-Gangstufen auf.

Da insbesondere die zeitlich überschnittene Betätigung der beiden Motorkupplungen bei einem derartigen Schaltvorgang äußerst komplex und mit vertretbarem mechanischem Aufwand manuell-mechanisch nicht zu bewerkstelligen ist, sind die bekannten Doppelkupplungsgetriebe automatisiert ausgeführt und weisen mehrere steuerbare Stellantriebe zur Betätigung der Motorkupplungen und der Gangkupplungen sowie mehrere Drehzahlsensoreinheiten zur Ermittlung erforderlicher Drehzahl- und Drehrichtungsinformationen auf. Wie u.a. auch der DE 199 39 818 C1 und der gattungsbildenden DE 199 39 819 C1 zu entnehmen ist, weisen bekannte Doppelkupplungsgetriebe bislang mindestens eine an der Antriebswelle angeordnete antriebsseitige Drehzahlsensoreinheit, eine an der ersten Eingangswelle des ersten Teilgetriebes angeordnete erste eingangsseitige Drehzahlsensoreinheit, eine an der zweiten Eingangswelle des zweiten Teilgetriebes angeordnete zweite eingangsseitige Drehzahlsensoreinheit, und eine an einer mit einem Achsantrieb in Verbindung stellenden Abtriebswelle oder einer mit der Abtriebswelle dauerhaft in Verbindung stehenden Ausgangswelle angeordnete und zumeist drehzahl- und drehrichtungssensitiv ausgebildete abtriebsseitige Drehzahlsensoreinheit auf. Die antriebsseitige Drehzahlsensoreinheit und die beiden eingangsseitigen Drehzahlensoreinheiten liefern jeweils die motorseitige und die getriebeseitige Drehzahl der beiden Motorkupplungen und werden daher vorwiegend zur Steuerung der beiden Motorkupplungen verwendet. Die abtriebsseitige Drehzahlsensoreinheit liefert die Drehzahl und die Drehrichtung der mit dem Achsantrieb verbundenen Abtriebswelle und wird insbesondere bei Anfahrvorgängen zur Ermittlung des Bewegungszustands, d.h. der Erkennung eines Vorwärtsrollens, eines Fahrzeugetilistands, eines Rückwärtsrollens, und der Höhe der Rollgeschwindigkeit, des betreffenden Kraftfahrzeuges verwendet. Des Weiteren wird die abtriebsseitige Drehzahlsensoreinheit auch für Diagnosezwecke, wie z.B. der Plausibilisierung des wirksamen Übersetzungsverhältnisses und der Überwachung der Drehzahl der Antriebswelle, verwendet.

Nachteilig an dieser Sensoranordnung ist jedoch die hohe Anzahl der verwendeten Drehzahlsensoreinheiten und insbesondere die räumliche Distanz der abtriebsseitigen Drehzahlsensoreinheit zu den übrigen Drehzahlsensoreinheiten. Durch die hohe Anzahl der Drehzahlsensoreinheiten' ergibt sich ein relativ hoher Kostenaufwand für Einkauf, Montage, und Verkabelung sowie entsprechende Fehlermöglichkeiten im Betrieb. Durch die räumliche Distanz der abtriebsseitigen Drehzahlsensoreinheit ist eine Zusammenfassung aller Drehzahlsensoreinheiten in einem vormontierbaren und gemeinsam installierbaren Modul praktisch unmöglich. Des weiteren ist die Anordnung der abtriebsseitigen Drehzahlsensoreinheit an der Abtriebswelle bzw. einer mit dieser verbundenen Ausgangswelle signaltechnisch ungünstig, da diese eine relativ geringe Drehzahl aufweist, was zu einer geringen zeitlichen Auflösung des betreffenden Sensorsignals,und damit zu einer verzögerten Erkennung einer Rollbewegung des Kraftfahrzeuges führt. Wie aus der DE 103 08 218 A1 bekannt ist, kann dieser Mangel zwar durch die zusätzliche Auswertung des Sensorsignals einer antriebsseitig an einer schneller drehenden Getriebewelle angeordneten einfachen Drehzahlsensoreinheit behoben werden. Dies ist jedoch mit einem erhöhten verfahrenstechnischen Aufwand verbunden.

Es ist daher das Problem der vorliegenden Erfindung, eine Sensoranordnung eines Doppelkupplungsgetriebes vorzuschlagen, die kostengünstiger und platzsparender ist, und mit der typische Steuerungsfunktionen des Doppelkupplungsgetriebes uneingeschränkt durchführbar sind.

Als weiteres Problem soll ein Verfahren zur Steuerung eines Doppelkupplungsgetriebes angegeben werden, mit dem typische Steuerungsfunktionen des Doppelkupplungsgetriebes mit weniger Drehzahlsensoreinheiten durchgeführt werden können.

Das Problem die Sensoranordnung betreffend wird erfindungsgemäß in Verbindung mit dem Oberbegriff des Anspruchs 1 dadurch gelöst, dass zumindest an einer Eingangswelle eines der beiden Teilgetriebe eine drehzahl- und drehrichtungssensitive Drehzahlsensoreinheit angeordnet ist.

Wie nachfolgend noch näher erläutert wird, können damit typische Steuerungsfunktionen des Doppelkupplungsgetriebes, für die bislang, die abtriebsseitige Drehzahisensoreinheit benötigt wurde, mittels der neuen drehzahl- und drehrichtungssensitiven eingangsseitigen Drehzahlsensoreinheit durchgeführt werden, und dies aufgrund der schneller drehenden Eingangswelle sogar mit besserer zeitlicher Auflösung. Hierdurch kann entweder die abtriebsseitige Drehzahlsensoreinheit eingespart werden oder die Betriebssicherheit der Getriebesteuerung erhöht werden, indem die betreffenden Steuerungsfunktionen bei einem Defekt einer der beiden drehzahl- und drehrichtungssensitiven Drehzahlsensoreinheiten jeweils mittels der anderen Drehzahlsensoreinheit durchgeführt werden.

Zur Vermeidung einer weiteren separaten Drehzahlsensoreinheit ist die neue drehzahl- und drehrichtungssensitive Drehzahlsensoreinheit bevorzugt durch eine entsprechende Ausbildung einer der vorhandenen eingangsseitigen Drehzahlsensoreinheiten realisiert.

Die drehzahl- und drehrichtungssensitive Drehzahlsensoreinheit ist vorteilhaft in an sich bekannter Weise aus einem drehrichtungskodierten Geberrad und einem einfachen Impulssensor gebildet, da diese Bauart besonders kostengünstig und platzsparend ist und nur eine Signalleitung benötigt.

Insbesondere bei Einsparung der abtriebsseitigen Drehzahlsensoreinheit können die Impulssensoren der antriebsseitigen Drehzahlsensoreinheit und der beiden eingangsseitigen Drehzahlsensoreinheiten, und ggf. auch eine zusätzliche eingangsseitige drehzahl- und drehrichtungssensitive Drehzahlsensoreinheit vorteilhaft in einem vormontierbaren und gemeinsam installierbaren Modul zusammengefasst werden.

Das Problem das Steuerungsverfahren betreffend wird erfindungsgemäß in Verbindung mit dem Oberbegriff des Anspruchs 5 dadurch gelöst, dass die Drehzahl und die Drehrichtung der Abtriebswelle mittels einer drehzahl- und drehrichtungssensitiv ausgebildeten eingangsseitigen Drehzahlsensoreinheit bestimmt wird, indem bei geöffneter Motorkupplung zunächst eine Gangstufe des die Drehzahlsensoreinheit aufweisenden Teilgetriebes eingelegt wird, indem mittels der Drehzahlsensoreinheit die Drehzahl und die Drehrichtung der Eingangswelle des betreffenden Teilgetriebes ermittelt wird, und indem nachfolgend aus der Drehzahl und der Drehrichtung der Eingangswelle mit dem Übersetzungsverhältnis und einer möglichen Drehrichtungsumkehr der eingelegten Gangstufe die Drehzahl und die Drehrichtung der Abtriebswelle berechnet wird.

Hierdurch kann unter Vermeidung einer Signalauswertung der abtriebsseitigen Drehzahlsensoreinheit die Drehzahl und Drehrichtung der Abtriebswelle sicher ermittelt werden, wobei zur Erzielung einer größtmöglichen zeitlichen Auflösung der Drehbewegung der Abtriebswelle zweckmäßig die kleinste Gangstufe des betreffenden Teilgetriebes eingelegt wird. Das erfindungsgemäße Verfahren, das vorwiegend bei einem Anfahrvorgang zur Bestimmung einer Fahrzeugbewegung, wie eines Vorwärtsrollens, eines Fahrzeugstillstands, eines Rückwärtsrollens, und einer Rollgeschwindigkeit, verwendet wird, kann somit wahlweise zur Ermöglichung einer Einsparung der abtriebsseitigen Drehzahlsensoreinheit oder zur Erhöhung der Betriebssicherheit als Backup-Verfahren im Falle eines Defektes der abtriebsseitigen Drehzahlsensoreinheit genutzt werden.

Bei einer Zuordnung der drehzahl- und drehrichtungssensitiven Drehzahlsensoreinheit zu dem die Anfahrgangstufe beinhaltenden Teilgetriebe wird bei einem Anfahrvorgang zur Ermittlung der Fahrzeugbewegung zweckmäßig die Anfahrgangstufe eingelegt.

Erfolgt das Anfahren aber mit einer Anfahrgangstufe des anderen Teilgetriebes, so wird zur Ermittlung der Fahrzeugbewegung in dem einen, die drehzahl- und drehrichtungssensitive Drehzahlsensoreinheit aufweisenden Teilgetriebe eine Gangstufe als Hilfsgangstufe eingelegt, um eine Verbindung zu der Abtriebswelle herzustellen.

Die Hilfsgangstufe wird nach Abschluss des Anfahrvorgangs wieder ausgelegt, wenn in einem unmittelbar nachfolgenden Schaltvorgang eine andere Gangstufe als Zielgangstufe vorgesehen ist. Die Hilfsgangstufe kann aber vorteilhaft eingelegt bleiben, wenn sie in einem unmittelbar nachfolgenden Schaltvorgang als Zielgangstufe vorgesehen ist.

Das Problem das Steuerungsverfahren betreffend wird erfindungsgemäß des weiteren in Verbindung mit dem Oberbegriff des Anspruchs 11 dadurch gelöst, dass die Drehzahl der Eingangswelle des einen Teilgetriebes mittels der eingangsseitigen Drehzahlsensoreinheit des anderen Teilgetriebes bestimmt wird, indem bei einer in beiden Teilgetrieben jeweils eingelegten Gangstufe zunächst mittels dieser Drehzahlsensoreinheit die Drehzahl der Eingangswelle des anderen Teilgetriebes ermittelt wird, und indem anschließend aus dieser Drehzahl mit den Übersetzungsverhältnissen der beiden eingelegten Gangstufen die Drehzahl der Eingangswelle des einen Tellgetriebes berechnet wird.

Auf ähnliche Weise kann auch die Drehrichtung der Eingangswelle des einen Teilgetriebes mittels der eingangsseitigen Drehzahisensoreinheit des anderen Teilgetriebes bestimmt werden, indem bei einer in beiden Teilgetrieben jeweils eingelegten Gangstufe zunächst mittels dieser Drehzahlsensoreinheit die Drehrichtung der Eingangswelle des anderen Teilgetriebes ermittelt wird, und indem anschließend aus dieser Drehrichtung mit den Drehrichtungsänderungen der Zahnradsätze der beiden eingelegten Gangstufen die Drehrichtung der Eingangswelle des einen Teilgetriebes berechnet wird. Hierzu ist im Gegensatz zu der zuvor beschriebenen Bestimmung der Drehzahl der Eingangswelle des einen Teilgetriebes allerdings eine drehrichtungssensitive Ausbildung der betreffenden eingangsseitigen Drehzahlsensoreinheit erforderlich.

Mit der beschriebenen Verfahrensweise kann unter Vermeidung einer Signalauswertung sowohl der abtriebsseitigen Drehzahlsensoreinheit als auch einer der beiden eingangsseitigen Drehzahlsensoreinheiten die Drehzahl und die Drehrichtung der Eingangswelle desjenigen Teilgetriebes bestimmt werden, dessen eingangsseitiger Drehzahlsensor nicht genutzt wird. Das erfindungsgemäße Verfahren, das vorwiegend bei einem sequenziellen Schaltvorgang, d.h. vorliegend einem Schaltvorgang zwischen einer Lastgangstufe des anderen Teilgetriebes und einer Zielgangstufe des einen Teilgetriebes, verwendet wird, kann somit alternativ zur Erhöhung der Betriebssicherheit als Backup-Verfahren im Fall eines Defektes an einer der beiden eingangsseitigen Drehzahlsensoreinheiten und zur Einsparung einer der beiden eingangsseitigen Drehzahlsensoreinheiten genutzt werden.

Da bei einem sequenziellen Schaltvorgang die Motorkupplung des die Zielgangstufe aufweisenden Teilgetriebes geregelt geschlossen wird, wogegen die Motorkupplung des die Lastgangstufe aufweisenden Teligetriebes zumeist ungeregelt geöffnet wird, ist die Kenntnis der Drehzahl der Eingangswelle des die Zielgangstufe beinhaltenden Teilgetriebes bis zum Ende des Schalvorgangs, d.h. bis zum vollständigen Schließen der betreffenden Motorkupplung, wünschenswert. Daher bleibt die Lastgangstufe bei einem Schaltvorgang, bei dem nur das Sensorsignal der eingangsseitigen Drehzahlsensoreinheit des die Lastgangstufe beinhaltenden Teilgetriebes genutzt wird, zweckmäßig bis zum vollständigen Schließen der der Zielgangstufe zugeordneten Motorkupplung eingelegt.

Das Verfahren kann aber auch dazu verwendet werden, bei einem Anfahrvorgang mit einer Anfahrgangstufe des einen Teilgetriebes die Drehzahl der zugeordneten Eingangswelle mittels der eingangsseitigen Drehzahlsensoreinheit des anderen Teilgetriebes zu bestimmen, wenn in dem anderen Teilgetriebe eine Gangstufe als Hilfsgangstufe eingelegt wird. Hierbei wird in dem anderen Teilgetriebe bevorzugt die zu der Anfahrgangstufe des einen Teilgetriebes nächsthöhere Gangstufe als Hilfsgangstufe eingelegt, da diese mit hoher Wahrscheinlichkeit die Zielgangstufe eines auf den Anfahrvorgang unmittelbar nachfolgenden Schaltvorgangs bildet.

Das Problem das Steuerungsverfahren betreffend wird erfindungsgemäß zusätzlich in Verbindung mit dem Oberbegriff des Anspruchs 16 dadurch gelöst, dass bei einer Fremdsynchronisierung der Gangstufen bei einem Schaltvorgang zwischen einer dem anderen Teilgetriebe zugeordneten Lastgangstufe und einer dem einen Teilgetriebe zugeordneten Zielgangstufe die ausgangsseitige Drehzahl der Gangkupplung der Zielgangstufe mittels der eingangsseitigen Drehzahlsensoreinheit des anderen Teilgetriebes bestimmt wird, indem zunächst mittels dieser Drehzahlsensoreinheit die Drehzahl der Eingangswelle des anderen Teilgetriebes ermittelt wird, und indem nachfolgend aus dieser Drehzahl mit dem zwischen der betreffenden Eingangswelle und der Gangkupplung der Zielgangstufe wirksamen Übersetzungsverhältnis die ausgangsseitige Drehzahl der Gangkupplung der Zielgangstufe berechnet wird.

Für eine Fremdsynchronisierung der Gangstufen, die z.B. über mit den Eingangswellen der Teilgetriebe in Verbindung stehende Hilfsantriebe erfolgen kann, ist die Kenntnis der Drehzahlen beiderseits der jeweiligen Gangkupplung, d.h. der eingangsseitigen Drehzahl und der ausgangsseitigen Drehzahl, erforderlich. Die eingangsseitige Drehzahl der Gangkupplung wird in diesem Fall üblicherweise mittels der eingangsseitigen Drehzahlsensoreinheit desselben Teilgetriebes bestimmt, wobei bei einer Anordnung der Gangkupplung auf der Ausgangswelle eine Umrechnung mittels des Übersetzungsverhältnisses der betreffenden Gangstufe erfolgt. Die ausgangsseitige Drehzahl der Gangkupplung kann aber unter Vermeidung einer Signalauswertung der abtriebsseitigen Drehzahlsensoreinheit erfindungsgemäß mittels der eingangsseitigen Drehzahlsensoreinheit des anderen Teilgetriebes bestimmt werden, indem die'ermittelte Drehzahl der Eingangswelle dieser Sensoreinheit mit dem zwischen dieser Eingangswelle und der Gangkupplung der Zielgangstufe wirksamen Übersetzungsverhältnis rückgerechnet wird, wobei dieses Übersetzungsverhältnis bei einer Anordnung der betreffenden Gangkupplung auf der Ausgangswelle dem Übersetzungsverhältnis der Lastgangstufe und bei einer Anordnung auf der Eingangswelle gleich dem Quotienten der Übersetzungsverhältnisse von Lastgangstufe und Zielgangstufe entspricht.

Weitere Einzelheiten der Erfindung ergeben sich aus der nachfolgenden ausführlichen Beschreibung und den beigefügten Zeichnungen, die beispielhaft zur Erläuterung der Erfindung dienen.

Hierzu zeigt:
- Fig. 1: Einen Antriebsstrang mit einem Doppelkupplungsgetriebe und einer erfindungsgemäßen Sensoranordnung in schematischer Form, und
- Fig. 2: einen Antriebsstrang nach Fig. 1 mit einer bekannten Sensoranordnung.

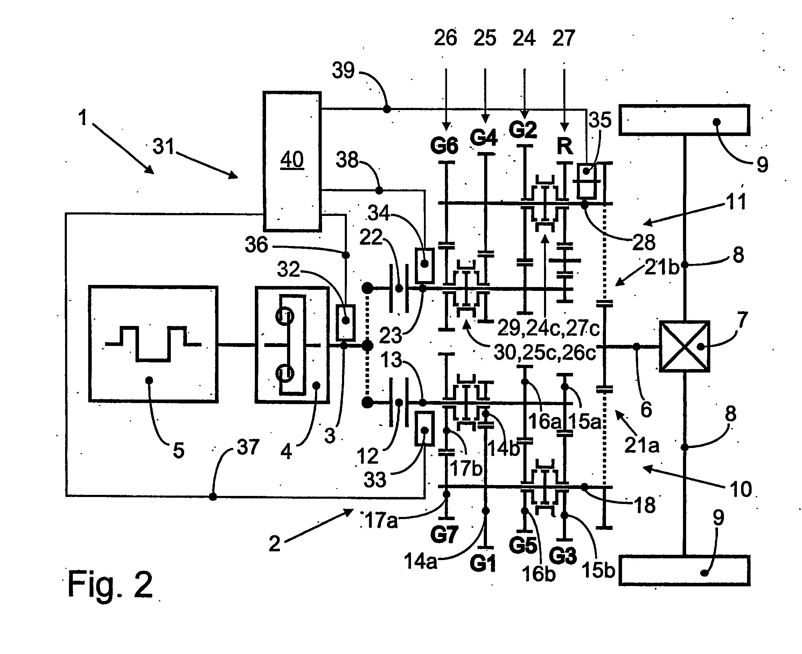

In einem bekannten Antriebsstrang 1 eines Kraftfahrzeuges nach Fig. 2 steht ein Doppelkupplungsgetriebe 2 antriebsseitig über eine Antriebswelle 3 und einen Schwingungsdämpfer 4 mit einem als Verbrennungsmotor ausgebildeten Antriebsmotor 5 in Verbindung, Abtriebsseitig ist das Doppelkupplungsgetriebe 2 über eine Abtriebswelle 6 mit einem Achsantrieb 7 verbunden, von dem ein von dem Antriebsmotor 5 erzeugtes und in dem Doppelkupplungsgetriebe gewandeltes Drehmoment über Triebwellen 8 an angetriebene Laufräder 9 weitergeleitet wird.

Das Doppelkupplungsgetriebe 2 besteht aus zwei Teilgetrieben 10, 11, einem ersten Teilgetriebe 10 und einem zweiten Teilgetriebe 11, die teilweise koaxial zueinander angeordnet sind, jedoch in Fig. 2 zur besseren Übersicht entzerrt dargestellt sind.

Das erste Teilgetriebe 10 weist eine erste Motorkupplung 12 auf, die motorseitig mit der Antriebswelle 3 und getriebeseitig mit einer ersten Eingangswelle 13 verbunden ist. Die erste Eingangswelle 13 ist selektiv über einen von mehreren, jeweils eine Gangstufe bildenden Zahnradsätzen 14, 15, 16, 17 mit einer ersten Ausgangswelle 18 verbindbar. Die Zahnradsätze 14, 15, 16, 17 weisen jeweils ei n mit der ersten Eingangswelle 13 oder der ersten Ausgangswelle 18 drehfest verbundenes Festrad 14a, 15a, 16a, 17a und jeweils ein auf der ersten Ausgangswelle 18 oder der ersten Eingangswelle 13 drehbar gelagertes Losrad 14b, 15b, 16b, 17b auf. Die Zahnradsätze 14,15,16,17 des ersten Teilgetriebes bilden jeweils eine Gangstufe, vorliegend eine erste Vorwärts-Gangstufe G1, eine dritte Vorwärts-Gangstufe G3, eine fünfte Vorwärts-Gangstufe G5, und eine siebte Vorwärts-Gangstufe G7. Die Gangstufen G1, G3, G5, G7 sind selektiv über zwei jeweils zwei Gangstufen zugeordnete Schaltmuffen 19, 20 und jeweils den Losrädern 14b, 15b, 16b, 17b zugeordnete Gangkupplungen 14c, 15c, 16c, 17c ein- und auslegbar. Die erste Ausgangswelle 18 steht über eine Abtriebsverzahnung 21 a dauerhaft mit der Abtriebswelle 6 in Verbindung.

Das zweite Teilgetriebe 11 weist eine zweite Motorkupplung 22 auf, die motorseitig mit der Antriebswelle 3 und getriebeseitig mit einer zweiten Eingangswelle 23 verbunden ist. Die zweite Eingangswelle 23 ist selektiv über einen von mehreren, jeweils eine Gangstufe bildenden Zahnradsätzen 24, 25, 26, 27 mit einer zweiten Ausgangswelle 28 verbindbar. Die Zahnradsätze 24, 25, 26, 27 weisen jeweils ein mit der zweiten Eingangswelle 23 oder der zweiten Ausgangswelle 28 drehfest verbundenes Festrad 24a, 25a, 26a, 27a und jeweils ein auf der zweiten Ausgangswelle 28 oder der zweiten Eingangswelle 23 drehbar gelagertes Losrad 24b, 25b, 26b, 27b auf. Die Zahnradsätze 24, 25, 26, 27 des zweiten Teilgetriebes bilden vorliegend eine zweite Vorwärts-Gangstufe G2, eine vierte Vorwärts-Gangstufe G4, eine sechste Vorwärts-Gangstufe G6, und eine RückwärtsGangstufe R, bei der durch ein zwischen dem Festrad 27a und dem Losrad 27b angeordnetes Zwischenrad 27d gegenüber den Vorwärts-Gangstufen G2, G4, G6 eine Drehrichtungsumkehr der zweiten Ausgangswelle 28 bewirkt wird. Die Gangstufen G2, G4, G6, R sind selektiv über zwei jeweils zwei Gangstufen zugeordnete Schaltmuffen 29, 30 und jeweils den Losrädern 24b, 25b, 26b, 27b zugeordnete Gangkupplungen 24c, 25c, 26c, 27c ein- und auslegbar. Die zweite Ausgangswelle 28 steht über eine Abtriebsverzahnung 21 b ebenfalls dauerhaft mit der Abtriebswelle 6 in Verbindung.

Die Kraftübertragung von den Antriebsmotor 5 zu dem Achsantrieb 7 erfolgt wechselweise über das erste Teilgetriebe 10 und das zweite Teilgetriebe 11. Ein sequenzieller Schaltvorgang zwischen einer Lastgangstufe, z.B. der dritten Vorwärtsgangstufe G3, des einen Teilgetriebes 10 und einer Zielgangstufe, z.B. der vierten Vorwärtsgangstufe G4, des anderen Teilgetriebes 11 erfolgt, bei gleichzeitig eingelegten Gangstufen G3, G4 in einer zeitlich überschnittenen Steuerung der beiden Motorkupplungen 12, 22, bei der ohne eine Zugkraflunterbrechung die Motorkupplung 12 der Lastgangstufe G3 geöffnet und die Motorkupplung 22 der Zielgangstufe G4 geschlossen wird.

Zur Steuerung der beiden Motorkupplungen 12, 22, insbesondere bei Anfahr- und Schaltvorgängen, weist das Doppelkupplungsgetriebe 2 üblicherweise eine Sensoranordnung 31 mit einer an der Antriebswelle 3 angeordneten antriebsseitigen Drehzahlsensoreinheit 32, einer an der ersten Eingangswelle 13 angeordneten ersten eingangsseitigen Drehzahlsensoreinheit 33, und einer an der zweiten Eingangswelle 23 angeordneten zweiten eingangsseitigen Drehzahlsensoreinheit 34 auf. Insbesondere zur Ermittlung einer Fahrzeugbewegung bei Anfahrvorgängen, wie eines Vorwärtsrollens, eines Fahrzeugstillstands; eines Rückwärtsrollens, und einer Rollgeschwindigkeit, und zur Plausibilisierung der jeweils aktiven Gangstufe umfasst die bekannte Sensoranordnung 31 auch eine vorliegend an der zweiten Ausgangswelle 28 angeordnete abtriebsseitige Drehzahlsensoreinheit 35. Die Drehzahlsensoreinheiten 32, 33, 34, 35, von'denen die abtriebsseitige Drehzahlsensoreinheit 35 drehzahl- und drehrichtungssensitiv ausgebildet ist, was in der Darstellung der Drehzahlsensoreinheit 35 in Fig. 2 du rch einen Teilungsstrich symbolisiert ist, und die übrigen Drehzahlsensoreinheiten 32, 33, 34 nur drehzahlsensitiv ausgebildet sind, stehen über Sensorleitungen 36, 37, 38, 39 mit einer Auswertungseinheit 40 in Verbindung, die mit einem (nicht abgebildeten) Getriebesteuergerät verbunden ist bzw. Bestandteil desselben ist. Mittels des Getriebesteuergerätes werden (nicht dargestellte) Stellantriebe zur Betätigung der Motorkupplungen 12, 22 und der Schaltmuffen 19, 20, 29, 30 angesteuert.

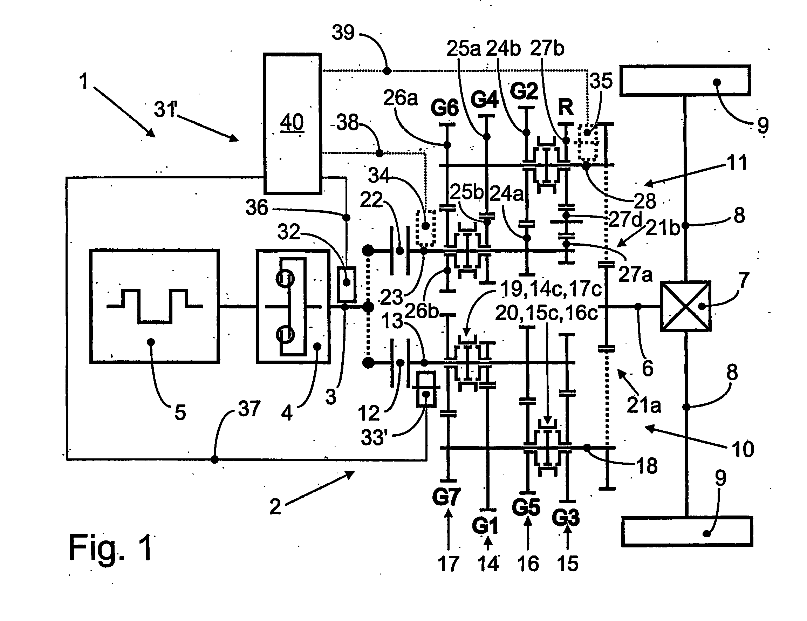

In dem in Fig. 1 abgebildeten Antriebsstrang 1 ist bei sonst identischer Ausbildung erfindungsgemäß eine der beiden eingangsseitigen Drehzahlsensoreinheiten 33, 34, vorliegend die erste eingangsseitige Drehzahlsensoreinheit 33' drehzahl- und drehrichtungssensitiv ausgebildet, was in der Darstellung der Drehzahlsensoreinheit 33' in Fig. 1 durch einen Teilungsstrich symbolisiert ist. Wie nachfolgend beispielhaft erläutert wird, ist hierdurch die Möglichkeit gegeben, typische Steuerungsfunktionen des Doppelkupplungsgetriebes 2 ohne eine Auswertung des Sensorsignals der abtriebsseitigen Drehzahlsensoreinheit 35 und ggf. auch ohne eine Auswertung des Sensorsignals der nur drehzahlsensitiven zweiten eingangsseitigen Drehzahlsensoreinheit 34 durchzuführen. Dies kann wahlweise zur Einsparung der betreffenden Drehzahlsensoreinheiten 34, 35 oder zu einer Aufrechterhaltung der Betriebsfähigkeit des Doppelkupplungsgetriebes 2 bei einem Defekt dieser Drehzahlsensoreinheiten 34, 35 und mithin zu einer Erhöhung der Betriebssicherheit des Doppelkupplungsgetriebes 2 genutzt werden. Eine mögliche Einsparung oder ein Defekt der betreffenden Drehzahlsensoreinheiten 34, 35 ist in der Fig. 1 durch eine strichlinierte Darstellung der Drehzahlsensoreinheiten 34, 35 und der zugeordneten Sensorleitungen 38, 39 angedeutet.

Erfindungsgemäß kann die Drehzahl und die Drehrichtung der Abtriebswelle 6 mittels der ersten eingangsseitigen Drehzahlsensoreinheit 33' bestimmt werden, indem bei geöffneter erster Motorkupplung 12 zunächst eine Gangstufe G1, G3, G5, G7 des ersten Teilgetriebes 10 eingelegt wird, indem mittels der Drehzahlsensoreinheit 33' die Drehzahl und die Drehrichtung der ersten Eingangswelle 13 ermittelt wird, und indem nachfolgend aus der Drehzahl und der Drehrichtung der Eingangswelle 13 mit dem Übersetzungsverhältnis und einer hier nicht vorliegenden, aber durch Zuordnung einer Rückwärts-Gangstufe zu dem ersten Teilgetriebe 10 theoretisch möglichen Drehrichtungsumkehr der eingelegten Gangstufe G1, G3, G5, G7 die Drehzahl und die Drehrichtung der Abtriebswelle 6 berechnet wird. Hierbei wird zur Erzielung einer größtmöglichen zeitlichen Auflösung einer Drehbewegung der Abtriebswelle 6, deren schnelle und genaue Ermittlung insbesondere bei einem Anfahrvorgang zur Bestimmung einer Fahrzeugbewegung von Bedeutung ist, zweckmäßig die kleinste Gangstufe, also vorliegend die erste Gangstufe G1 eingelegt.

Das Einlegen der ersten Gangstufe G1 zur Bestimmung der Drehzahl und der Drehrichtung der Abtriebswelle 6 mittels der ersten eingangsseitigen Drehzahlsensoreinheit 33' ist hinsichtlich der zeitlichen Auflösung optimal, egal ob mit der ersten Gangstufe G1 des ersten Teilgetriebes 10 oder mit der zweiten Gangstufe G2 des zweiten Teilgetriebes 11 angefahren wird. Im letztgenannten Fall kann es aber auch zweckmäßig sein, die dritte Gangstufe. G3 zur Bestimmung der Drehzahl und der Drehrichtung der Abtriebswelle 6 einzulegen, da diese Gangstufe G3 mit hoher Wahrscheinlichkeit in dem unmittelbar nachfolgenden Schaltvorgang die Zielgangstufe bildet und somit nach dem Anfahrvorgang zunächst eingelegt bleiben kann.

Ebenfalls kann mit der erfindungsgemäßen Sensoranordnung 31' auch die Drehzahl der zweiten Eingangswelle 23 mittels der ersten eingangsseitigen Drehzahlsensoreinheit 33' bestimmt werden, indem bei einer in beiden Teilgetrieben 10, 11 jeweils eingelegten Gangstufe (G3, G4) zunächst mittels dieser Drehzahlsensoreinheit 33' die Drehzahl der ersten Eingangswelle 13 ermittelt wird, und indem anschließend aus dieser Drehzahl mit den Übersetzungsverhältnissen der beiden eingelegten Gangstufen (G3, G4) die Drehzahl der zweiten Eingangswelle 23 berechnet wird. Dieses Verfahren kann sowohl für einen Schaltvorgang zwischen einer Lastgangstufe des einen Teilgetriebes und einer Zielgangstufe des anderen Teilgetriebes als auch für einen Anfahrvorgang mit einer Anfahrgangstufe des zweiten Teilgetriebes 11 verwendet werden. Dabei ist es bei einem Schaltvorgang in eine Zielgangstufe (G4) des zweiten Teilgetriebes 11 sinnvoll, die Lastgangstufe (G3) des ersten Teilgetriebes 10 zur genauen Bestimmung der Drehzahl der zweiten Eingangswelle 23 bis zum vollständigen Schließen der zweiten Motorkupplung 22 eingelegt zu lassen. Bei einem Anfahrvorgang mit einer Anfahrgangstufe, z.B. der zweiten Gangstufe G2, des zweiten Teilgetriebes 11 wird zur Bestimmung der Drehzahl der zweiten Eingangswelle 23 mittels der ersten eingangsseitigen Drehzahlsensoreinheit 33' eine Gangstufe des ersten Teilgetriebes 10 als Hilfsgangstufe eingelegt, wobei als Hilfsgangstufe zweckmäßig die zu der Anfahrgangstufe G2 des zweiten Teilgetriebes 11 nächsthöhere Gangstufe, d.h. vorliegend die dritte Gangstufe G3 des ersten Teilgetriebes 10 eingelegt wird.

Schließlich kann das erfindungsgemäße Verfahren auch dazu genutzt werden, bei einer Fremdsynchronisierung der Gangstufen bei einem Schaltvorgang zwischen einer dem ersten Teilgetriebe 10 zugeordneten Lastgangstufe G1, G3, G5, G7 und einer dem zweiten Teilgetriebe 11 zugeordneten Zielgangstufe G2, G4, G6, R die ausgangsseitige Drehzahl der Gangkupplung 24c, 25c, 26c, 27c der Zielgangstufe mittels der ersten eingangsseitigen Drehzahlsensoreinheit 33' zu bestimmen, indem zunächst mittels dieser Drehzahlsensoreinheit 33' die Drehzahl der ersten Eingangswelle 13 ermittelt wird, und indem nachfolgend aus dieser Drehzahl mit dem zwischen der betreffenden Eingangswelle 13 und der Gangkupplung 24c, 25c, 26c, 27c der Zielgangstufe G2, G4, G6, R wirksamen Übersetzungsverhältnis die ausgangsseitige Drehzahl der Gangkupplung 24c, 25c, 26c, 27c der Zielgangstufe G2, G4, G6, R berechnet wird:

### Bezugszeichenliste

- 1: Antriebsstrang
- 2: Doppelkupplungsgetriebe
- 3: Antriebswelle
- 4: Schwingungsdämpfer
- 5: Antriebsmotor
- 6: Abtriebswelle
- 7: Achsantrieb
- 8: Triebwelle
- 9: Laufrad
- 10: (erstes) Teilgetriebe
- 11: (zweites) Teilgetriebe
- 12: (erste) Motorkupplung
- 13: (erste) Eingangswelle
- 14: Zahnradsatz
- 14a: Festrad
- 14b: Losrad
- 14c: Gangkupplung
- 15: Zahnradsatz
- 15a: Festrad
- 15b: Losrad
- 15c: Gangkupplung
- 16: Zahnradsatz
- 16a: Festrad
- 16b: Losrad
- 16c: Gangkupplung
- 17: Zahnradsatz
- 17a: Festrad
- 17b: Losrad
- 17c: Gangkupplung
- 18: (erste) Ausgangswelle
- 19: Schaltmuffe
- 20: Schaltmuffe
- 21a: Abtriebsverzahnung
- 21 b: Abtriebsverzahnung
- 22: (zweite) Motorkupplung
- 23: (zweite) Eingangswelle
- 24: Zahnradsatz
- 24a: Festrad
- 24b: Losrad
- 24c: Gangkupplung
- 25: Zahnradsatz
- 25a: Festrad
- 25b: Losrad
- 25c: Gangkupplung
- 26: Zahnradsatz
- 26a: Festrad
- 26b: Losrad
- 26c: Gangkupplung
- 27: Zahnradsatz
- 27a: Festrad
- 27b: Losrad
- 27c: Gangkupplung'
- 27d: Zwischenrad
- 28: (zweite) Ausgangswelle
- 29: Schaltmuffe
- 30: Schaltmuffe
- 31: Sensoranordnung
- 31': Sensoranordnung
- 32: antriebsseitige Drehzahlsensoreinheit
- 33: (erste) eingangsseitige Drehzahlsensoreinheit
- 33': (erste) eingangsseitige Drehzahlsensoreinheit
- 34: (zweite) eingangsseitige Drehzahlsensoreinheit
- 35: abtriebsseitige Drehzahlsensoreinheit
- 36: Sensorleitung
- 37: Sensorleitung
- 38: Sensorleitung
- 39: Sensorleitung
- 40: Auswertungseinheit
- G1: erste (Vörwärts-)Gangstufe
- G2: zweite (Vorwärts-)Gangstufe
- G3: dritte (Vorwärts-)Gangstufe
- G4: vierte (Vorwärts-)Gangstufe
- G5: fünfte (Vorwärts-)Gangstufe
- G6: sechste (Vorwärts-)Gangstufe
- G7: siebte (Vorwärts-)Gangstufe
- R: (Rückwärts-)Gangstufe

## Patentansprüche

1. Sensoranordnung zur Steuerung eines automatisierten Doppelkupplungspetriebes (2), das zwei Tellgetriebe (10, 11) mit jeweils einer motorseitig über eine Antriebswelle (3) mit einem Antriebsmotor verbundenen Motorkupplung, einer getriebeseitig mit der Motorkupplung verbundenen Eingangswelle (13, 23), und einer Gruppe von Gangstufen bildenden Zahnradsätzen mit jeweils einem Festrad und einem Losrad umfasst, wobei mittels der Gangstufen jeweils durch das Einrücken einer dem Losrad zugeordneten Gangkupplung eine übersetzte Verbindung der Eingangswelle mit einer Ausgangswelle (18, 28) herstellbar ist, die eine mit einem Achsantrieb in Verbindung stehende Abtriebswelle (6) bildet oder mit einer solchen Abtriebswelle dauerhaft in Verbindung steht, mit mindestens einer an der Antriebswelle (3) angeordneten antriebsseitigen Drehzahlsensoreinheit (32), einer an der ersten Eingangswelle (13) des ersten Teilgetriebes angeordneten ersten eingangsseitigen Drehzahlsensöreinhert (33), und einer an der zweiten Eingangswelle (23) des zweiten Teilgetriebes angeordneten zweiten eingangsseitigen Drehzahlsensoreinheit (34), die jeweils ein mit der betreffenden Welle drehfest verbundenes Geberrad und einen im Wirkbereich des Geberrades gehäusefest angeordneten Impulssensor aufweisen,
**dadurch gekennzeichnet, dass**
zumindest an einer Eingangswelle (13) eines der beiden Teilgetriebe (10,11) eine drehzahl- und drehrichtungssensitive Drehzahlsensoreinheit (33') angeordnet ist.

2. Sensoranordnung nach Anspruch 1,
**dadurch gekennzeichnet, dass**
eine der beiden eingangsseitigen Drehzahlsensoreinheiten (33, 34) drehzahl- und drehrichtungssensitiv ausgebildet ist.

3. Sensoranordnung nach Anspruch 1 oder 2,
**dadurch gekennzeichnet, dass**
die drehzahl- und drehrichtungssensitive Drehzahlsensoreinheit (33') ein drehrichtungskodiertes Geberrad und einen einfachen Impulssensor aufweist.

4. Sensoranordnung nach einem der Ansprüche 1 bis 3,
**dadurch gekennzeichnet, dass**
die Impulssensoren der antriebsseitigen Drehzahlsensoreinheit (32), und der beiden eingangsseitigen Drehzahlsensoreintieiten (33', 34) in einem vormontierbaren und gemeinsam installierbaren Modul zusammengefasst sind.

5. Verfahren zur Steuerung eines automatisierten Doppelkupplungsetriebes (2), das zwei Teilgetriebe (10, 11) mit jeweils einer motorseitig über eine Antriebswelle (3) mit einem Antriebsmotor verbundenen Motorkupplung, einer getriebeseitig mit der Motorkupplung verbundenen Eingangswelle (13, 23), und einer Gruppe von Gangstufen bildenden Zahnradsätzen mit jeweils einem Festrad und einem Losrad umfasst, wobei mittels der Gangstufen jeweils durch das Einrücken einer dem Losrad zugeordneten Gangkupplung eine übersetzte Verbindung der Eingangswelle mit einer Ausgangswelle (18, 28) herstellbar ist, die eine mit einem Achsantrieb in Verbindung stehende Abtriebswelle bildet oder mit einer solchen Abtriebswelle (3) dauerhaft in Verbindung steht, und das eine Sensoranordnung mit mindestens einer an der Antriebswelle (3) angeordneten antriebsseitigen Drehzahlsensoreinheit (32), einer an der Eingangswelle (13) des ersten Teilgetriebes angeordneten ersten eingangsseitigen Drehzahlsensoreinheit (33), und einer an der Eingangswelle (23) des zweiten Teilgetriebes angeordneten zweiten eingangsseitigen Drehzahlsensoreinheit (34) aufweist,
**dadurch gekennzeichnet, dass**
die Drehzahl und die Drehrichtung der Abtriebswelle (6) mittels einer drehzahl- und drehrichtungssensitiv ausgebildeten eingangsseitigen Drehzahlsensoreinheit (33') bestimmt wird, indem bei geöffneter Motorkupplung (12) zunächst eine Gangstufe (G1, G3, G5, G7) des die Drehzahlsensoreinheit (33') aufweisenden Teilgetriebes (10) eingelegt wird, indem mittels der Drehzahlsensoreinheit (33') die Drehzahl und die Drehrichtung der Eingangswelle (13) des betreffenden Tellgetriebes (10) ermittelt wird, und indem nachfolgend aus der Drehzahl und der Drehrichtung der Eingangswelle (13) mit dem Übersetzungsverhältnis und einer möglichen Drehrichtungsumkehr der eingelegten Gangstufe (G1, G3, G5, G7) die Drehzahl und die Drehrichtung der Abtriebswelle (6) berechnet wird.

6. Verfahren nach Anspruch 5,
**dadurch gekennzeichnet, dass**
zur Erzielung einer größtmöglichen zeitlichen Auflösung einer Drehbewegung der Abtriebswelle (6) die kleinste Gangstufe (G1) des betreffenden Teilgetriebes (10) eingelegt wird.

7. Verfahren nach Anspruch 5 oder 6,
**dadurch gekennzeichnet, dass**
die Ermittlung der Drehzahl und der Drehrichtung der Abtriebswelle (6) bei einem Anfahrvorgang zur Bestimmung einer Fahrzeugbewegung, wie eines Vorwärtsrollens, eines Fahrzeugstillstands, eines Rückwärtsrollens, und einer Rollgeschwindigkeit, verwendet wird.

8. Verfahren nach Anspruch 7,
**dadurch gekennzeichnet, dass**
bei einer Zuordnung der drehzahl- und drehrichtungssensitiven Drehzahlsensoreinheit (33') zu dem die Anfahrgangstufe (G1) beinhaltenden Teilgetriebe (10) zur Ermittlung der Fahrzeugbewegung die Anfahrgangstufe (G1) eingelegt wird.

9. Verfahren nach Anspruch 7,
**dadurch gekennzeichnet, dass**
bei einer Zuordnung der drehzahl- und drehrichtungssensitiven Drehzahlsensoreinheit (33') zur dem anderen, die Anfahrgangstufe (G2) nicht beinhaltenden Teilgetriebe (10) zur Ermittlung der Fahrzeugbewegung in dem anderen Keilgetriebe (10) eine Gangstufe (G1, G3) als Hilfsgangstufe eingelegt wird.

10. Verfahren nach Anspruch 9,
**dadurch gekennzeichnet, dass**
die Hilfsgangstufe (G1) nach Abschluss des Anfahrvorgangs wieder ausgelegt wird, wenn in einem unmittelbar nachfolgenden Schaltvorgang eine andere Gangstufe (G3) als Zielgangstufe vorgesehen ist, und dass die Hilfsgangstufe (G3) eingelegt bleibt, wenn in einem unmittelbar nachfolgenden Schaltvorgang diese Gangstufe (G3) als Zielgangstufe vorgesehen ist.

11. Verfahren zur Steuerung eines automatisierten Doppelkupplungsgetriebes (2), das zwei Teilgetriebe (10, 11) mit jeweils einer motorseitig über eine Antriebswelle (3) mit einem Antriebsmotor verbundenen Motorkupplung, einer getriebeseitig mit der Motorkupplung verbundenen Eingangswelle (13, 23), und einer Gruppe von Gangstufen bildenden Zahnradsätzen mit jeweils einem Festrad und einem Losrad umfasst, wobei mittels der Gangstufen jeweils durch das Einrücken einer dem Losrad zugeordneten Gangkupplung eine übersetzte Verbindung der Eingangswelle mit einer Ausgangswelle (18, 28) herstellbar ist, die eine mit einem Achsantrieb in Verbindung stehende Abtriebswelle (6) bildet oder mit einer solchen Abtriebswelle dauerhaft in Verbindung steht, und das eine Sensoranordnung mit mindestens einer an der Antriebswelle (3) angeordneten antriebsseitigen Drehzahlsensoreihheit (32) und einer an der Eingangswelle (13) eines der beiden Teilgetriebe angeordneten eingangsseitigen Drehzahlsensoreinheit (33') aufweist,
**dadurch gekennzeichnet, dass**
die Drehzahl der Eingangswelle (23) des einen Teilgetriebes (11) mittels der eingangsseitigen Drehzahlsensoreinheit (33') des anderen Teilgetriebes (10) bestimmt wird, indem bei einer in beiden Teilgetrieben (10, 11) jeweils eingelegten Gangstufe (G3, G4) zunächst mittels dieser Drehzahlsensoßeinheit (33') die Drehzahl der Eingangswelle (13) des anderen Teilgetriebes (10) ermittelt wird, und indem anschließend aus dieser Drehzahl mit den Übersetzungsverhältnissen der beiden eingelegten Gangstufen (G3, G4) die Drehzahl der Eingangswelle (23) des einen Teilgetriebes (11) berechnet wird.

12. Verfahren nach Anspruch 11,
**dadurch gekennzeichnet, dass**
die Drehrichtung der Eingangswelle (23) des einen Teilgetriebes (11) mittels der drehrichtungssensitiv ausgebildeten eingangsseitigen.Drehzahlsensoreinheit (33') des anderen Teilgetriebes (10) bestimmt wird, indem bei einer in beiden Teilgetrieben (10, 11) jeweils eingelegten Gangstufe, (G3, G4) zunächst mittels dieser Drehzahlsensoreinheit (33') die Drehrichtung der Eingangswelle (13) des anderen Teilgetriebes (10) ermittelt wird, und indem anschließend aus dieser Drehrichtung mit den Drehrichtungsänderungen der Zahnradsätze der beiden eingelegten Gangstufen (G3, G4) die Drehrichtung der Eingangswelle (23) des einen Teilgetriebes (11) berechnet wird.

13. Verfahren nach Anspruch 11 oder 12,
**dadurch gekennzeichnet, dass**
bei einem Schaltvorgang zwischen einer dem anderen Teilgetriebe (10) zugeordneten Lastgangstufe (G3) und einer dem einen Teilgetriebe (11) zugeordneten Zielgangstufe (G4) zur Bestimmung der Drehzahl und / oder der Drehrichtung der Eingangswelle (23) des einen Teilgetriebes (11) mittels der eingangsseitigen Drehzahlsensoreinheit (33') des anderen Teilgetriebes (10) die Lastgangstufe (G3) bis zum vollständigen Schließen der der Zielgangstufe (G4) zugeordneten Motorkupplung (22) eingelegt bleibt.

14. Verfahren nach Anspruch 11 oder 12,
**dadurch gekennzeichnet, dass**
bei einem Anfahrvorgang mit einer Anfahrgangstufe (G2) des einen Teilgetriebes (11) zur Bestimmung der Drehzahl und 1 oder der Drehrichtung der zugeordneten Eingangswelle (23) mittels der eingangsseitigen Drehzahlsensoreinheit (33') des anderen Teilgetriebes (10) in dem anderen Teilgetriebe (10) eine Gangstufe (G1, G3) als Hilfsgangstufe eingelegt wird.

15. Verfahren nach Anspruch 14,
**dadurch gekennzeichnet, dass**
in dem anderen Teilgetriebe (10) die zu der Anfahrgangstufe (G2) des einen Teilgetriebes (11) nächsthöhere Gangstufe (G3) als Hilfsgangstufe eingelegt wird.

16. Verfahren zur Steuerung eines automatisierten Doppelkupplungsgetriebes (2), das zwei Teilgetriebe (10, 11) mit jeweils einer motorseitig über eine Antriebswelle (3) mit einem Antriebsmotor verbundenen Motorkupplung, einer getriebeseitig mit der Motorkupplung verbundenen Eingangswelle (13, 23), und einer Gruppe von Gangstufen bildenden Zahnradsätzen mit jeweils einem Festrad und einem Losrad umfasst, wobei mittels der Gangstufen jeweils durch das Einrücken einer dem Losrad zugeordneten Gangkupflung eine übersetzte Verbindung der Eingangswelle mit einer Ausgangswelle (18, 28) herstellbar ist, die eine mit einem Achsantrieb in Verbindung stehende Abtriebswelle (6) bildet oder mit einer solchen Abtriebswelle dauerhaft in Verbindung steht, und das eine Sensoranordnung mit mindestens einer an der Antriebswelle (3) angeordneten antriebsseitigen Drehzahlsensoreinheit (32), einer an der Eingangswelle (13) des ersten Teilgetriebes angeordneten ersten eingangsseitigen Drehzahlsensoreinheit (33), und einer an der Eingangswelle (23) des zweiten Teilgetriebes angeordneten zweiten eingangsseitigen Drehzahlsensoreinheit (34) aufweist,
**dadurch gekennzeichnet, dass**
bei einer Fremdsynchronisierung der Gangstufen bei einem Schaltvorgang zwischen einer dem anderen Teilgetriebe (10) zugeordneten Lastgangstufe (G3) und einer dem einen Teilgetriebe (11) zugeordneten Zielgangstufe (G4) die ausgangsseitige Drehzahl der Gangkupplung (25c) der Zielgangstufe (G4) mittels der eingangsseitigen Drehzahlsensoreinheit (33') des anderen Teilgetriebes (10) bestimmt wird, indem zunächst mittels dieser Drehzahlsensoreinheit (33') die Drehzahl der Eingangswelle (13) des anderen Teilgetriebes (10) ermittelt wird, und indem nachfolgend aus dieser Drehzahl mit dem zwischen der betreffenden Eingangswelle (13) und der Gangkupplung (25c) der Zielgangstufe (G4) wirksamen Übersetzungsverhältnis die ausgangsseitige Drehzahl der Gangkupplung (25c) der Zielgangstufe (G4) berechnet wird.

## Claims

1. Sensor array for controlling an automated twin-clutch transmission (2) which comprises two component transmissions (10, 11) each with a engine clutch which is connected on the engine side via a drive shaft (3) to a drive engine, an input shaft (13, 23) which is connected on the transmission side to the engine clutch, and gearwheel sets which form a group of gearspeeds and each have a fixed wheel and a freely moving wheel, wherein a geared connection of the input shaft to an output shaft (18, 28) can be produced by means of the gearspeeds by the respective engagement of a clutch which is assigned to the freely moving wheel, said output shaft forming a driven shaft (6) which is connected to an axial drive or is permanently connected to such a driven shaft, having at least one drive-side rotational speed sensor unit (32) which is arranged on the drive shaft (3), a first input-side rotational speed sensor unit (33) which is arranged on the first input shaft (13) of the first component transmission, and a second input-side rotational speed sensor unit (34) which is arranged on the second input shaft (23) of the second component transmission, which rotational speed sensor units (32, 33, 34) each have a sensor wheel which is connected in a rotationally fixed fashion to the respective shaft and a pulse sensor which is arranged fixed to the housing in the effective range of the sensor wheel,
**characterized in that**
a rotational speed sensor unit (33') which is sensitive to the rotational speed and to the direction of rotation is arranged on at least one input shaft (13) of one of the two component transmissions (10, 11).

2. Sensor array according to Claim 1,
**characterized in that**
one of the two input-side rotational speed sensor units (33, 34) is designed to be sensitive to the rotational speed and to the direction of rotation.

3. Sensor array according to Claim 1 or 2,
**characterized in that**
the rotational speed, sensor unit (33') which is sensitive to the rotational speed and to the direction of rotation has a sensor wheel which is encoded for the direction of rotation and a simple pulse sensor.

4. Sensor array according to one of Claims 1 to 3,
**characterized in that**
the pulse sensors of the drive-side rotational speed sensor unit (32) and of the two input-side rotational speed sensor units (33', 34) are combined in a module which can be pre-mounted and installed together.

5. Method for controlling an automated twin-clutch transmission (2) which comprises two component transmissions (10, 11) each with a engine clutch which is connected on the engine side via a drive shaft (3) to a drive engine, an input shaft (13, 23) which is connected on the transmission side to the engine clutch, and gearwheel sets which form a group of gearspeeds and each have a fixed wheel and a freely moving wheel, wherein a geared connection of the input shaft to an output shaft (18, 28) can be produced by means of the gearspeeds by the respective engagement of a clutch which is assigned to the freely moving wheel, said output shaft forming a driven shaft which is connected to an axial drive or is permanently connected to such a driven shaft (3), and which has a sensor array having at least one drive-side rotational speed sensor unit (32) which is arranged on the drive shaft (3), a first input-side rotational speed sensor unit (33) which is arranged on the input shaft (13) of the first component transmission, and a second input-side rotational speed sensor unit (34) which is arranged on the input shaft (23) of the second component transmission,
**characterized in that**
the rotational speed and the direction of rotation of the driven shaft (6) are determined by means of an input-side rotational speed sensor unit (33') which is designed to be sensitive to the rotational speed and to the direction of rotation **in that**, when the engine clutch (12) is opened, a gearspeed (G1, G3, G5, G7) of the component transmission (10) which has the rotational speed sensor unit (33') is initially engaged in that the rotational speed and the direction of rotation of the input shaft (13) of the respective component transmission (10) are sensed by means of the rotational speed sensor unit (33'), and **in that** the rotational speed and the direction of rotation of the driven shaft (6) are subsequently calculated from the rotational speed and the direction of rotation of the input shaft (13) with the transmission ratio and a possible reversal of the direction of transmission of the engaged gearspeed (G1, G3, G5, G7).

6. Method according to Claim 5,
**characterized in that**
the smallest gearspeed (G1) of the respective component transmission (10) is engaged in order to obtain a maximum chronological resolution of a rotational movement of the driven shaft (6).

7. Method according to Claim 5 or 6,
**characterized in that**
the sensing of the rotational speed and the direction of rotation of the driven shaft (6) is used in a starting process for determining a movement of the vehicle such as forward rolling, a stationary state of the vehicle, backward rolling and a rolling speed.

8. Method according to Claim 7,
**characterized in that**
the starting gearspeed (G1) is engaged when the rotational speed sensor unit (33') which is sensitive to the rotational speed and to the direction of rotation is assigned to the component transmission (10) containing the starting gearspeed (G1), in order to sense the movement of the vehicle.

9. Method according to Claim 7,
**characterized in that**
a gearspeed (G1, G3) is engaged as an auxiliary gearspeed when the rotational speed sensor unit (33') which is sensitive to the rotational speed and to the direction of rotation is assigned to the other component transmission (10) not containing the starting gearspeed (G2), in order to sense the movement of the vehicle in the other component transmission (10).

10. Method according to Claim 9,
**characterized in that**
the auxiliary gearspeed (G1) is reconfigured after the termination of the starting process if a different gearspeed (G3) is provided as the target gearspeed in a directly subsequent shifting process, and **in that** the auxiliary gearspeed (G3) remains engaged if this gearspeed (G3) is provided as the target gearspeed in a directly subsequent shifting process.

11. Method for controlling an automated twin-clutch transmission (2) which comprises two component transmissions (10, 11) each with a engine clutch which is connected on the engine side via a drive shaft (3) to a drive engine, an input shaft (13, 23) which is connected on the transmission side to the engine clutch, and gearwheel sets which form a group of gearspeeds and each have a fixed wheel and a freely moving wheel, wherein a geared connection of the input shaft to an output shaft (18, 28) can be produced by means of the gearspeeds by the respective engagement of a clutch which is assigned to the freely moving wheel, said output shaft forming a driven shaft (6) which is connected to an axial drive or is permanently connected to such a driven shaft, and which has a sensor array having at least one drive-side rotational speed sensor unit (32) which is arranged on the drive shaft (3), and an input-side rotational speed sensor unit (33') which is arranged on the input shaft (13) of one of the two component transmissions,
**characterized in that**
the rotational speed of the input shaft (23) of the one component transmission (11) is determined by means of the input-side rotational speed sensor unit (33') of the other component transmission (10) **in that**, when a gearspeed (G3, G4) is respectively engaged in each of the two component transmissions (10, 11), the rotational speed of the input shaft (13) of the other component transmission (10) is firstly sensed by means of this rotational speed sensor unit (33'), and **in that** the rotational speed of the input shaft (23) of the one component transmission (11) is subsequently calculated from this rotational speed with the transmission ratios of the two engaged gearspeeds (G3, G4).

12. Method according to Claim 11,
**characterized in that**
the direction of rotation of the input shaft (23) of the one component transmission (11) is determined by means of the input-side rotational speed sensor unit (33'), designed to be sensitive to the direction of rotation, of the other component transmission (10) in that, when a gearspeed (G3, G4) is respectively engaged in each of the two component transmissions (10, 11), the direction of rotation of the input shaft (13) of the other component transmission (10) is firstly sensed by means of this rotational speed sensor unit (33'), and **in that** the direction of rotation of the input shaft (23) of the one component transmissions (11) is subsequently calculated from this direction of rotation with the changes in the direction of rotation of the gearwheel sets of the two engaged gearspeeds (G3, G4).

13. Method according to Claim 11 or 12,
**characterized in that**,
when there is a shifting process between a low-speed gearspeed (G3) which is assigned to the other component transmission (10) and a target gearspeed (G4) which is assigned to the one component transmission (11) in order to determine the rotational speed and/or the direction of rotation of the input shaft (23) of the one component transmission (11) by means of the input-side rotational speed sensor unit (33') of the other component transmission (10), the low-speed gearspeed (G3) remains engaged until the engine clutch (22) which is assigned to the target gearspeed (G4) closes completely.

14. Method according to Claim 11 or 12,
**characterized in that**,
when there is a starting process with a starting gearspeed (G2) of the one component transmission (11) in order to determine the rotational speed and/or the direction of rotation of the assigned input shaft (23) by means of the input-side rotational speed sensor unit (33') of the other component transmission (10), a gearspeed (G1, G3) is engaged as an auxiliary gearspeed in the other component transmission (10).

15. Method according to Claim 14,
**characterized in that**,
in the other gearspeed (10), the gearspeed (G3) which is the next highest in relation to the starting gearspeed (G2) of the one component transmission (11) is engaged as an auxiliary gearspeed.

16. Method for controlling an automated twin-clutch transmission (2) which comprises two component transmissions (10, 11) each with a engine clutch which is connected on the engine side via a drive shaft (3) to a drive engine, an input shaft (13, 23) which is connected on the transmission side to the engine clutch, and gearwheel sets which form a group of gearspeeds and each have a fixed wheel and a freely moving wheel, wherein a geared connection of the input shaft to an output shaft (18, 28) can be produced by means of the gearspeeds by the respective engagement of a clutch which is assigned to the freely moving wheel, said output shaft forming a driven shaft (6) which is connected to the axial drive or is permanently connected to such a driven shaft, and which has a sensor array having at least one drive-side rotational speed sensor unit (32) which is arranged on the drive shaft (3), a first input-side rotational speed sensor unit (33) which is arranged on the input shaft (13) of the first component transmission, and a second input-side rotational speed sensor unit (34) which is arranged on the input shaft (23) of the second component transmission,
**characterized in that**,
in the case of an extraneous synchronization of the gearspeeds during a shifting operation between a low-speed gear stage (G3) which is assigned to the other component transmission (10) and a target gearspeed (G4) which is assigned to the one component transmission (11), the output-side rotational speed of the clutch (25c) of the target gearspeed (G4) is determined by means of the input-side rotational speed sensor unit (33') of the other component transmission (10) **in that**, firstly, the rotational speed of the input shaft (13) of the other component transmission (10) is sensed by means of this rotational speed sensor unit (33') and **in that** the output-side rotational speed of the clutch (25c) of the target gearspeed (G4) is subsequently calculated from this rotational speed with the transmission ratio which is effective between the respective input shaft (13) and the clutch (25c) of the target gearspeed (G4).

## Revendications

1. Arrangement détecteur pour commander une boîte de vitesses automatisée à double accouplement (2), laquelle comprend deux boîtes de vitesses partielles (10, 11) respectivement munies d'un accouplement de moteur côté moteur relié avec un moteur d'entraînement par le biais d'un arbre d'entraînement (3), d'un arbre d'entrée (13, 23) côté boîte de vitesses relié avec l'accouplement de moteur et d'un groupe de jeux de pignons formant les rapports comprenant chacun un pignon fixe et un pignon mobile, une liaison démultipliée de l'arbre d'entrée avec un arbre de sortie (18, 28) pouvant être établie au moyen des rapports à chaque fois en embrayant un accouplement de rapport associé au pignon mobile, l'arbre de sortie formant un arbre mené (6) qui est relié avec un entraînement d'essieu ou étant relié de manière permanente avec un tel arbre mené, comprenant au moins une unité de détection de vitesse de rotation (32) côté entraînement disposée sur l'arbre d'entraînement (3), une première unité de détection de vitesse de rotation (33) côté entrée disposée sur le premier arbre d'entrée (13) de la première boîte de vitesses partielle, et une deuxième unité de détection de vitesse de rotation (34) côté entrée disposée sur le deuxième arbre d'entrée (23) de la deuxième boîte de vitesses partielle, lesquelles présentent respectivement une roue émettrice reliée avec l'arbre concerné de manière à ne pas pouvoir tourner par rapport à celui-ci et d'un capteur d'impulsions monté à demeure sur le boîtier dans la zone d'action de la roue émettrice, **caractérisé en ce qu'**une unité de détection de vitesse de rotation (33') sensible à la vitesse de rotation et au sens de rotation est disposée au moins sur un arbre d'entrée (13) de l'une des deux boîtes de vitesses partielles (10, 11).

2. Arrangement détecteur selon la revendication 1, **caractérisé en ce que** l'une des deux unités de détection de vitesse de rotation (33, 34) côté entrée est sensible à la vitesse de rotation et au sens de rotation,

3. Arrangement détecteur selon la revendication 1 ou 2, **caractérisé en ce que** l'unité de détection de vitesse de rotation (33') sensible à la vitesse de rotation et au sens de rotation comprend une roue émettrice qui code le sens de rotation et un capteur d'impulsions simple.

4. Arrangement détecteur selon l'une des revendications 1 à 3, **caractérisé en ce que** les capteurs d'impulsions de l'unité de détection de vitesse de rotation (32) côté entraînement et des deux unités de détection de vitesse de rotation (33, 34) côté entrée sont regroupés dans un module pouvant être préassemblé et installé en commun.

5. Procédé pour commander une boîte de vitesses automatisée à double accouplement (2), laquelle comprend deux boîtes de vitesses partielles (10, 11) respectivement munies d'un accouplement de moteur côté moteur relié avec un moteur d'entraînement par le biais d'un arbre d'entraînement (3), d'un arbre d'entrée (13, 23) côté boîte de vitesses relié avec l'accouplement de moteur et d'un groupe de jeux de pignons formant les rapports comprenant chacun un pignon fixe et un pignon mobile, une liaison démultipliée de l'arbre d'entrée avec un arbre de sortie (18, 28) pouvant être établie au moyen des rapports à chaque fois en embrayant un accouplement de rapport associé au pignon mobile, l'arbre de sortie formant un arbre mené (6) qui est ou étant relié de manière permanente avec un tel arbre d'entraînement, et qui présente un arrangement détecteur comprenant au moins une unité de détection de vitesse de rotation (32) côté entraînement disposée sur l'arbre d'entraînement (3), une première unité de détection de vitesse de rotation (33) côté entrée disposée sur l'arbre d'entrée (13) de la première boîte de vitesses partielle, et une deuxième unité de détection de vitesse de rotation (34) côté entrée disposée sur l'arbre d'entrée (23) de la deuxième boîte de vitesses partielle, **caractérisé en ce que** la vitesse de rotation et le sens de rotation de l'arbre mené (6) sont déterminés au moyen d'une unité de détection de vitesse de rotation (33') côté entrée sensible à la vitesse de rotation et au sens de rotation en engageant tout d'abord, lorsque l'accouplement du moteur (12) est ouvert, un rapport (G1, G3, G5, G7) de la boîte de vitesses partielle (10) qui présente l'unité de détection de vitesse de rotation (33'), en déterminant la vitesse de rotation et le sens de rotation de l'arbre d'entrée (13) de la boîte de vitesses partielle (10) concernée au moyen de l'unité de détection de vitesse de rotation (33') et en calculant ensuite la vitesse de rotation et le sens de rotation de l'arbre mené (6) à partir de la vitesse de rotation et du sens de rotation de l'arbre d'entrée (13) avec le rapport de démultiplication et une éventuelle inversion du sens de rotation du rapport (G1, G3, G5, G7) engagé.

6. Procédé selon la revendication 5, **caractérisé en ce que** le rapport le plus petit (G1) de la boîte de vitesses partielle (10) concernée est engagé pour obtenir la résolution dans le temps la plus élevée possible d'un mouvement de rotation de l'arbre mené (6).

7. Procédé selon la revendication 5 ou 6, **caractérisé en ce que** la détermination de la vitesse de rotation et du sens de rotation de l'arbre mené (6) est utilisée lors d'un processus de démarrage pour déterminer un mouvement du véhicule tel qu'une marche avant, une immobilisation du véhicule, une marche arrière et une vitesse de roulage.

8. Procédé selon la revendication 7, **caractérisé en ce que** lorsque l'unité de détection de vitesse de rotation (33') sensible à la vitesse de rotation et au sens de rotation est affectée à la boîte de vitesse partielle (10) contenant le rapport de démarrage (G1), le rapport de démarrage (G1) est engagé pour déterminer le mouvement du véhicule.

9. Procédé selon la revendication 7, **caractérisé en ce que** lorsque l'unité de détection de vitesse de rotation (33') sensible à la vitesse de rotation et au sens de rotation est affectée à l'autre boîte de vitesse partielle (10) ne contenant pas le rapport de démarrage (G2), un rapport (G1, G3) est engagé en tant que rapport auxiliaire dans l'autre boîte de vitesses partielle (10) pour déterminer le mouvement du véhicule.

10. Procédé selon la revendication 9, **caractérisé en ce que** le rapport auxiliaire (G1) est de nouveau libéré après avoir achevé le processus de démarrage si un autre rapport (G3) est prévu comme rapport voulu dans une opération de changement de rapport qui suit immédiatement et **en ce que** le rapport auxiliaire (G3) reste engagé si ce rapport (G3) est prévu comme rapport voulu dans l'opération de changement de rapport qui suit immédiatement.

11. Procédé pour commander une boîte de vitesses automatisée à double accouplement (2), laquelle comprend deux boîtes de vitesses partielles (10, 11) respectivement munies d'un accouplement de moteur côté moteur relié avec un moteur d'entraînement par le biais d'un arbre d'entraînement (3), d'un arbre d'entrée (13, 23) côté boîte de vitesses relié avec l'accouplement de moteur et d'un groupe de jeux de pignons formant les rapports comprenant chacun un pignon fixe et un pignon mobile, une liaison démultipliée de l'arbre d'entrée avec un arbre de sortie (18, 28) pouvant être établie au moyen des rapports à chaque fois en embrayant un accouplement de rapport associé au pignon mobile, l'arbre de sortie formant un arbre mené (6) qui est ou étant relié de manière permanente avec un tel arbre d'entraînement, et qui présente un arrangement détecteur comprenant au moins une unité de détection de vitesse de rotation (32) côté entraînement disposée sur l'arbre d'entraînement (3) et une unité de détection de vitesse de rotation (33') côté entrée disposée sur l'arbre d'entrée (13) de l'une des deux boîtes de vitesses partielles, **caractérisé en ce que** la vitesse de rotation de l'arbre d'entrée (23) de l'une des boîtes de vitesses partielles (11) est déterminée au moyen de l'unité de détection de vitesse de rotation (33') côté entrée de l'autre boîte de vitesses partielle (10) en déterminant tout d'abord la vitesse de rotation de l'arbre d'entrée (13) de l'autre boîte de vitesses partielle (10) au moyen de cette unité de détection de vitesse de rotation (33') lorsqu'un rapport (G3, G4) est à chaque fois engagé dans les deux boîtes de vitesses partielles (10 11) et en calculant ensuite la vitesse de rotation de l'arbre d'entrée (23) de l'une des boîtes de vitesses partielles (11) à partir de cette vitesse de rotation avec les rapports de démultiplication des deux rapports (G3, G4) engagés.

12. Procédé selon la revendication 11, **caractérisé en ce que** le sens de rotation de l'arbre d'entrée (23) de l'une des boîtes de vitesses partielles (11) est déterminé au moyen de l'unité de détection de vitesse de rotation (33') côté entrée sensible au sens de rotation de l'autre boîte de vitesses partielle (10) en déterminant tout d'abord le sens de rotation de l'arbre d'entrée (13) de l'autre boîte de vitesses partielle (10) au moyen de cette unité de détection de vitesse de rotation (33') lorsqu'un rapport (G3, G4) est à chaque fois engagé dans les deux boîtes de vitesses partielles (10, 11) et en calculant ensuite le sens de rotation de l'arbre d'entrée (23) de la boîte de vitesses partielle (11) à partir de ce sens de rotation avec les changements de sens de rotation des jeux de pignons des deux rapports (G3, G4) engagés.

13. Procédé selon la revendication 11 ou 12, **caractérisé en ce que** lors d'un processus de changement de rapport entre un rapport de charge (G3) affecté à l'autre boîte de vitesses partielle (10) et un rapport voulu (G4) associé à l'une des boîtes de vitesses partielles (11), pour pouvoir déterminer la vitesse de rotation et/ou le sens de rotation de l'arbre d'entrée (23) de l'une des boîtes de vitesses partielles (11) au moyen de l'unité de détection de vitesse de rotation (33') côté entrée de l'autre boîte de vitesses partielle (10), le rapport de charge (G3) reste engagé jusqu'à la fermeture complète de l'accouplement de moteur (22) affecté au rapport voulu (G4).

14. Procédé selon la revendication 11 ou 12, **caractérisé en ce que** lors d'un processus de démarrage avec un rapport de démarrage (G2) de l'une des boîtes de vitesses partielles (11), pour pouvoir déterminer la vitesse de rotation et/ou le sens de rotation de l'arbre d'entrée (23) associé au moyen de l'unité de détection de vitesse de rotation (33') côté entrée de l'autre boite de vitesses partielle (10), un rapport (G1, G3) faisant office de rapport auxiliaire est engagé dans l'autre boîte de vitesses partielle (10).

15. Procédé selon la revendication 14, **caractérisé en ce que** dans l'autre boîte de vitesses partielle (10), le rapport (G3) immédiatement supérieur au rapport de démarrage (G2) de l'une des boîtes de vitesses partielles (11) est engagé en tant que rapport auxiliaire.

16. Procédé pour commander une boîte de vitesses automatisée à double accouplement (2), laquelle comprend deux boîtes de vitesses partielles (10, 11) respectivement munies d'un accouplement de moteur côté moteur relié avec un moteur d'entraînement par le biais d'un arbre d'entraînement (3), d'un arbre d'entrée (13, 23) côté boîte de vitesses relié avec l'accouplement de moteur et d'un groupe de jeux de pignons formant les rapports comprenant chacun un pignon fixe et un pignon mobile, une liaison démultipliée de l'arbre d'entrée avec un arbre de sortie (18, 28) pouvant être établie au moyen des rapports à chaque fois en embrayant un accouplement de rapport associé au pignon mobile, l'arbre de sortie formant un arbre mené (6) qui est ou étant relié de manière permanente avec un tel arbre d'entraînement, et qui présente un arrangement détecteur comprenant au moins une unité de détection de vitesse de rotation (32) côté entraînement disposée sur l'arbre d'entraînement (3), une première unité de détection de vitesse de rotation (33) côté entrée disposée sur l'arbre d'entrée (13) de la première boîte de vitesses partielle et une deuxième unité de détection de vitesse de rotation (34) côté entrée disposée sur l'arbre d'entrée (23) de la deuxième boîte de vitesses partielle, **caractérisé en ce que** lors d'une synchronisation externe des rapports au moment d'un changement de rapport entre un rapport de charge (G3) affecté à l'autre boîte de vitesses partielle (10) et un rapport voulu (G4) associé à l'une des boîtes de vitesses partielles (11), la vitesse de rotation côté sortie de l'accouplement de rapport (25c) du rapport voulu (G4) est déterminée au moyen de l'unité de détection de vitesse de rotation (33') côté entrée de l'autre boîte de vitesses partielle (10) en déterminant tout d'abord la vitesse de rotation de l'arbre d'entrée (13) de l'autre boîte de vitesses partielle (10) au moyen de cette unité de détection de vitesse de rotation (33') et en calculant ensuite la vitesse de rotation côté sortie de l'accouplement de rapport (25c) du rapport voulu (G4) à partir de cette vitesse de rotation avec le rapport de démultiplication présent entre l'arbre d'entrée (13) concerné et l'accouplement de rapport (25c) du rapport voulu (G4).
